# EUROPÄISCHE PATENTSCHRIFT

(11) **EP 0 954 686 B1**
(45) Veröffentlichungstag und Bekanntmachung des Hinweises auf die Patenterteilung: **09.04.2003**
(21) Anmeldenummer: 98907979.3
(22) Anmeldetag: 23.01.1998
(51) Int. Cl.: F02B 27/02

(54) **SAUGROHR ZUR STEUERUNG DES LUFTAUFWANDES IM ANSAUGTRAKT EINER BRENNKRAFTMASCHINE**
INTAKE PIPE FOR REGULATING AIR CONSUMPTION IN THE INTAKE TRACT OF AN INTERNAL COMBUSTION ENGINE
TUBULURE D'ASPIRATION POUR LA REGULATION DE LA CONSOMMATION D'AIR DANS LE SYSTEME D'ASPIRATION D'UN MOTEUR A COMBUSTION INTERNE

(30) Priorität: 24.01.1997 DE 19702317
(43) Veröffentlichungstag der Anmeldung: 10.11.1999
(73) Patentinhaber: FILTERWERK MANN & HUMMEL GmbH, 71631 Ludwigsburg (DE)
(72) Erfinder: PAFFRATH, Holger, D-71636 Ludwigsburg (DE); PAUER, Thomas, D-71691 Freiberg (DE)
(74) Vertreter: Voth, Gerhard, Dipl.-Ing.
(86) Internationale Anmeldenummer: EP9800360
(87) Internationale Veröffentlichungsnummer: WO98032958

(56) Entgegenhaltungen:
- EP-A- 0 355 960
- EP-A- 0 645 530
- EP-A- 0 701 057
- EP-A- 0 747 587
- US-A- 5 156 117
- US-A- 5 526 789
- PATENT ABSTRACTS OF JAPAN vol. 011, no. 082 (M-571), 12.März 1987 & JP 61 237823 A (MAZDA MOTOR CORP), 23.Oktober 1986,
- PATENT ABSTRACTS OF JAPAN vol. 014, no. 029 (M-922), 19.Januar 1990 & JP 01 267313 A (HONDA MOTOR CO LTD), 25.Oktober 1989,

## Beschreibung

### Stand der Technik

Die Erfindung betrifft ein Saugrohr zur Steuerung des Luftaufwandes einer Brennkraftmaschine.

Bei einem aus der EP 0 355 960 A2 bekannten Saugrohr ist eine Steuerung der Luftmenge bzw. des Luftaufwandes im Ansaugtrakt einer Brennkraftmaschine durch ein wechselseitiges Schalten verschiedener Schwingrohre beschrieben. Hier ist ein Drehschieber als eine Art Weiche mit einem innenliegenden Kanal vorhanden, bei dem der Kanal in einer Schaltstellung das eine und in der anderen Schaltstellung das andere Schwingrohr mit dem Ansaugflansch des jeweiligen Zylinders der Brennkraftmaschine verbindet.

Es ist ferner aus der japanischen Patentanmeldung 1-267313 eine Vorrichtung zur Luftansaugung eines Verbrennungsmotors bekannt, bei dem zwei Luftansaugwege vorgesehen sind und ein Ventil zum Öffnen und Schließen des zweiten Luftansaugweges. Das Ventil ist ein Hohlzylinder, dessen innerer Hohlraum durchgehend mit dem ersten Luftansaugweg verbunden ist und am ersten Luftansaugweg so angebracht ist, dass es sich zwischen den Positionen zum Öffnen und zum Schließen mit der Mittelachse des ersten Luftansaugwegs als Mittelpunkt drehen kann. Das Ventil weist ein Ventilloch an der Umfangswand auf zum Öffnen und Schließen des zweiten Luftansaugweges. Das Ventil ist aufwendig gestaltet und benötigt für einen zuverlässigen Betrieb präzise Lagerungen.

### Aufgangenstellung

Es ist somit Aufgabe der Erfindung, eine Vorrichtung der eingangs genannten Art dahingehend zu verbessert, daß ein einfach zu erzeugendes, zuverlässig arbeitendes und billiges Saugrohr entsteht, bei dem der Luftaufwandsverlauf einfach optimierbar ist.

### Vorteile der Erfindung

Erfindungsgemäß wird die Aufgabe dadurch gelöst, daß bei mindestens einem Ansaugtrakt einer Brennkraftmaschine ein einfach herzustellendes Saugrohr dadurch geschaffen wird, daß der Ansaugtrakt in wenigstens zwei Schwingrohre unterschiedlicher Länge mündet, wobei erfindungsgemäß zur Steuerung der Luftmenge bzw. des Luftaufwands im gesamten Ansaugweg mindestens eines der Schwingrohre stufenlos zwischen vollständiger Öffnung und Verschluß gesteuert und dem jeweils anderen Schwingrohr zugeschaltet werden kann.

Es ist vorgesehen, daß die Steuerung im Bereich des kürzeren Schwingrohres angeordnet ist. Durch diese Anordnung kann das kürzere der Schwingrohre im Bedarfsfall veränderlicher Luftaufwandserfordernisse kurzgeschlossen werden.

Bei dem erfindungsgemäßen Saugrohr weist das kurze Schwingrohr einen Drehschieber auf, mittels dem das Schwingrohr stufenlos steuerbar ist, was zu den erwähnten Vorteilen bezüglich des Luftaufwands bei Brennkraftmaschinen führt.

Ein weiterer Vorteil der Erfindung ist, daß der Drehschieber im Mündungsbereich der Schwingrohre angeordnet ist, was dazu führt, daß keine Totzonen im Ansaugtrakt des Saugrohres entstehen. Diese Anordnung erleichtert sowohl die Montage als auch die Wartung der Drehschiebereinheiten, da man diese als ein Teil für beispielsweise mehrzylindrige Brennkraftmaschinen ausführen kann, so daß man diese dann nur noch in die dafür vorgesehenen Durchgangsöffnungen stecken, bzw. herausnehmen muß.

Eine vorteilhafte Weiterbildung ergibt sich, wenn der Drehschieber und/oder das Saugrohr auf Kunststoff besteht. Durch die Ausführung in Kunststoff lassen sich klare Gewichts- und Kostenvorteile erzielen.

Weiter kann man erfindungsgemäß vorsehen, daß der Ansaugtrakt mittels der Schwingrohre mit einem Ansaugverteiler kommuniziert. Die gemeinsame Verwendung von Funktionseinheiten führt zu weiteren Gewichts- und Kosteneinsparungen.

In einer anderen vorteilhaften Weiterbildung ist vorgesehen, daß die Steuerung des Drehschiebers mittels Unterdruck geschieht. Unterdruck steht an einer Brennkraftmaschine, insbesondere in Abhängigkeit der unterschiedlichen Lastzustände der Brennkraftmaschine kostenlos zur Verfügung, z.B. im Ansaugtrakt derselben.

Eine vorteilhafte Weiterbildung der Erfindung sieht vor, daß die Steuerung des Drehschiebers elektromagnetisch und/oder hydraulisch geschieht.

In einer anderen vorteilhaften Weiterbildung ist vorgesehen, daß die Steuerung des Drehschiebers mittels gekoppelter Schub- und Zugstange erfolgt, die an der Stirnseite des Drehschiebers in der Weise angebracht ist, daß über sie ein Stellmoment auf den Drehschieber übertragen werden kann. Auf diese Art kann der Drehschieber alle Zylinder mittels des Saugrohres an die jeweilige Betriebssituation der Brennkraftmaschine angepaßt mit Luft versorgen.

Weiter kann man erfindungsgemäß vorsehen, daß die Steuerung des Drehschiebers mittels gekoppeltem Schrittmotor erfolgt. Die Verwendung eines z. B. elektrischen Schrittmotors ermöglicht die toleranzarme Einstellung der Drosselklappe.

Eine vorteilhafte Weiterbildung der Erfindung sieht vor, daß der Drehschieberkunststoff mit Gleitmitteln dotiert ist, was die Lagerung, bzw. das Gleitverhalten des Drehschiebers im Saugrohr klar verbessert.

Der Drehschieber kann in an sich bekannter Weise als Schaltwalze aufgebaut sein, die durch Drehung Kanäle öffnen oder sperren kann. Die Schaltwalze ist hierbei über ein Gleitlager in einem Gehäuse gelagert und kann gegebenenfalls mit einem federwirksamen Element in einer bestimmten Stellung gehalten und gegebenenfalls auch abgedichtet werden.

Zusätzliche vorteilhafte Weiterbildungen ergeben sich aus den restlichen Unteransprüchen. Diese und weitere Merkmale von bevorzugten Weiterbildungen der Erfindung gehen außer aus den Ansprüchen auch aus der Beschreibung und den Zeichnungen hervor.

### Zeichnung

Die Erfindung wird anhand eines in der Zeichnung dargestellten Ausführungsbeispiels erläutert. Es zeigen:
Figur 1 einen Schnitt durch ein Saugrohr mit zwei Schwingrohren und
Figur 2 die Luftaufwandsverläufe für verschiedene Drehschieberstellungen im Saugrohr.

### Beschreibung des Ausführungsbeispiels

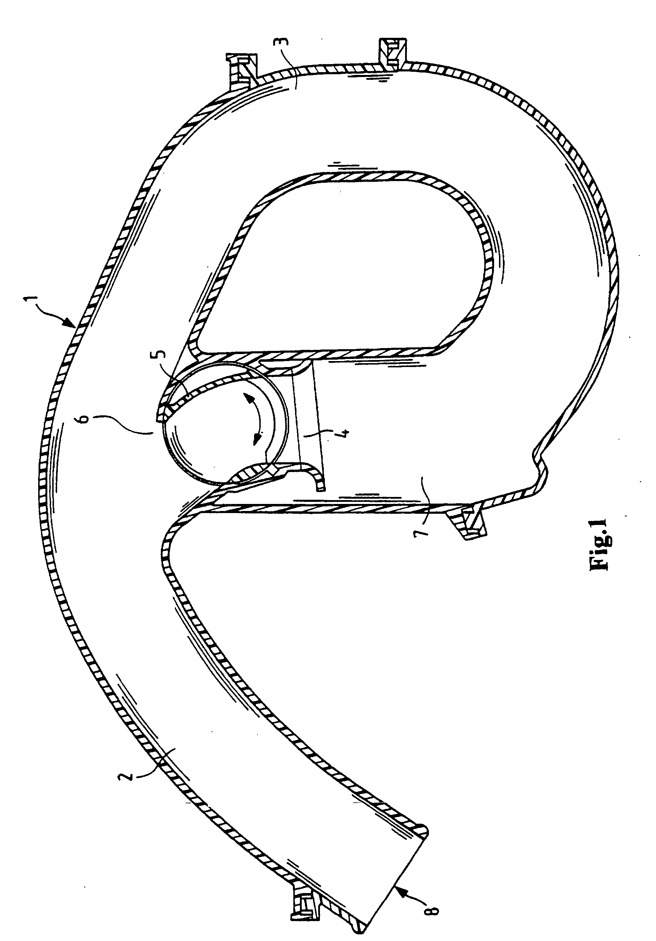

Ein in Figur 1 dargestelltes Saugrohr 1 befindet sich im Ansaugtrakt einer hier nicht dargestellten und auch nicht weiter erläuterten Brennkraftmaschine für ein Kraftfahrzeug. Das Saugrohr 1 besteht aus wenigstens einem Ansaugtrakt 2, der sich zwischen dem Zylinderkopf der nicht dargestellten Brennkraftmaschine, beziehungsweise deren Zylinderkopfanschlussöffnung 8 und dem Mündungsbereich 6 befindet. Weiterhin sind zwei Schwingrohre 3 und 4 und ein Ansaugverteiler 7 vorhanden.

Im Bereich der Zylinderkopfanschlussöffnung 8 wird das Saugrohr 1 mit der nicht dargestellten Brennkraftmaschine mittels eines ebenfalls nicht dargestellten Flansches verbunden.

Die Anzahl der Zylinder der Brennkraftmaschine bestimmt die Anzahl an Ansaugtrakten des Saugrohres 1, wobei für jeden Zylinder der Brennkraftmaschine mindestens ein Ansaugtrakt vorgesehen ist. Der Ansaugtrakt erstreckt sich von der Zylinderkopfanschlussöffnung bis zum Mündungsbereich 6. Im Mündungsbereich 6 verzweigt sich der Rohrweg des Ansaugtrakt des Saugrohrs 1 in ein langes Schwingrohr 3 und ein kurzes Schwingrohr 4. Beide Schwingrohre 3 und 4 münden gemeinsam in einen Ansaugverteiler, in den auch die hier nicht gezeigten Schwingrohre anderer Zylinder münden. Der gemeinsame Ansaugverteiler des Saugrohres 1 kommuniziert mit der Reinluftseite eines hier ebenfalls nicht dargestellten Luftfilters.

Der Drehschieber 5, der für die Frage der Strömungsführung im Saugrohr 1 zuständig ist, befindet sich direkt am einen Ende des kurzen Schwingrohres 4, das dem Mündungsbereich 6 zugewendet ist. Der Drehschieber 5 ist durch seine Geometrie derart ausgebildet, daß er stufenlos den Querschnitt des kurzen Schwingrohres 4 von seiner Geschlossenstellung bis hin zur vollen Durchlassöffnung, die in Figur 1 dargestellt ist, jede Querschnittszwischenstufe zuläßt.

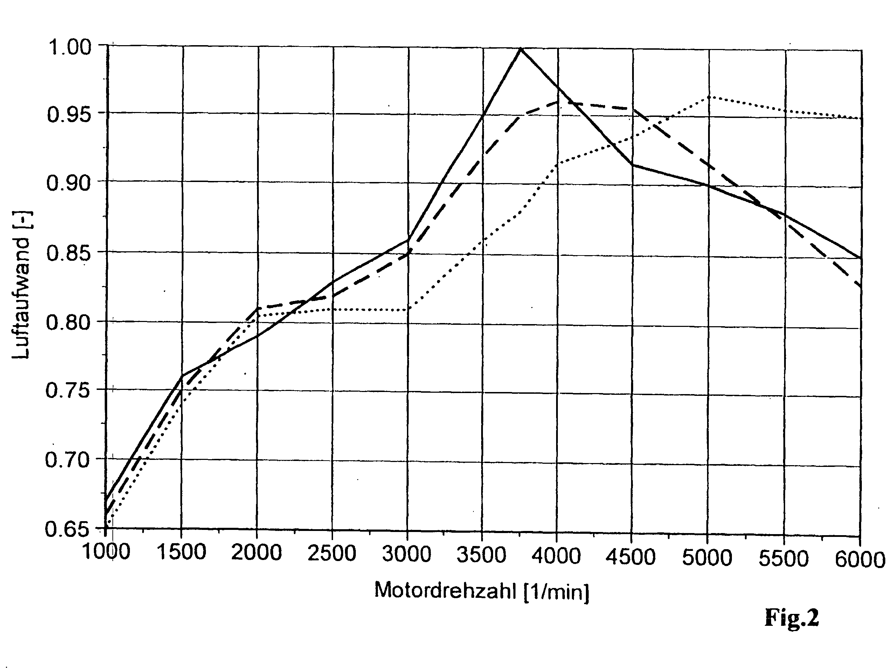

In Figur 2 ist der Verlauf des Luftaufwandes einer Brennkraftmaschine in Abhängigkeit der Motordrehzahl für drei Saugrohrspezifikationen dargestellt. Die durchgehende Linie zeigt für den Fall der unveränderlichen Saugrohrgeometrie einen Verlauf, bei dem sich ein Luftaufwandsmaximum im Bereich zwischen 3500 und 4000 Umdrehungen pro Minute einstellt.

Die gepunktete Linie zeigt den Verlauf des Luftaufwandes bei einem Saugrohr, bei dem es möglich ist, die Schwingrohrgeometrie in der Weise zu verändern, daß von einer Geometrie auf die andere umgeschaltet wird. Hierbei zeigt sich ein Maximum bezüglich des Luftaufwandes bei etwa 5000 Umdrehungen pro Minute.

Der Verlauf der gestrichelten Linie in Figur 2 macht deutlich, daß durch die erfindungsgemäße Verwendung eines stufenlos steuerbaren Schwingrohres 4 (vg. Figur 1) eine Variabilität in der Gestaltung der Schwingrohrgeometrie eintritt, die den Verlauf des Luftaufwandes weiter optimiert, was nach der Figur 2 insbesondere im Bereich zwischen 3800 und 4500 Umdrehungen pro Minute zu sehen ist. Aber selbst in Bereichen niedriger Drehzahlen wird eine Optimierung des Luftaufwandes erreichbar, wie dies im Bereich um 2000 Umdrehungen pro Minute aus der gestrichelten Linie zu erkennen ist.

Anstelle eines Drehschiebers 5 kann auch eine beliebige Schaltklappe verwendet werden. Selbstverständlich ist auch die Anwendung eines Klappenventils möglich.

Der Ansaugverteiler 7 ist in der Figur 1 als gemeinsamer Sammelraum für das Schwingrohr 3 und das Schwingrohr 4 dargestellt. Es besteht jedoch die Möglichkeit, für jedes der Schwingrohre getrennte Sammelräume vorzusehen. Diese getrennten Sammelräume werden mit einem Drehschieber zu- bzw. abgeschaltet. Die beiden Sammelräume können auch umgeschaltet werden, das heißt, ein Drehschieber ist an dem ersten Sammelraum derart anzuordnen, daß er entweder einen Durchtrittsquerschnitt zu dem ersten Sammelraum öffnet oder diesen verschließt und gleichzeitig den Durchtrittsquerschnitt zum zweiten Sammelraum öffnet. Mit der Verwendung eines Drehschiebers sind verschiedene Varianten denkbar. Wesentlich bei der Erfindung ist die stufenlose Steuerung des Luftaufwandes über ein Ventil oder über einen Drehschieber, wobei gleichzeitig oder getrennt wenigstens zwei Schwingrohre zu- oder abgeschaltet werden können.

### Bezugszeichenliste

- 1 =: Saugrohr
- 2 =: Ansaugtrakt
- 3 =: Schwingrohr
- 4 =: Schwingrohr
- 5 =: Drehschieber
- 6 =: Mündungsbereich
- 7 =: Ansaugverteiler
- 8 =: Zylinderkopfanschlussöffnung

## Patentansprüche

1. Saugrohr zur Steuerung des Luftaufwandes im Ansaugtrakt eines Verbrennungsmotors, wobei die Ansaugung der Luft im Ansaugtrakt über mindestens zwei Schwingrohre (3, 4) aufteilbar ist und die Schwingrohre unterschiedliche Längen aufweisen, wobei in wenigstens einem Schwingrohr (4) ein Drehschieber vorgesehen ist, mittels diesem das Schwingrohr (4) stufenlos zwischen vollständiger Öffnung und Verschluß steuerbar ist und dem jeweils anderen Schwingrohr zugeschaltet wird, und wobei der Drehschieber (5) sich direkt an einem Ende im kurzen Schwingrohr (4) befindet, das dem Mündungsbereich (6) zugewendet ist, und wobei die Bohrung für die Aufnahme des Drehschiebers das kurze Schwingrohr (4) schneidet.

2. Saugrohr nach Anspruch 1, **dadurch gekennzeichnet, dass**
- der Drehschieber (5) und/oder das Saugrohr (1) aus Kunststoff bestehen.

3. Saugrohr nach einem der Ansprüche 1 oder 2, **dadurch gekennzeichnet, dass**
- der Ansaugtrakt (2) mittels der Schwingrohre (3, 4) mit einem Ansaugverteiler (7) kommuniziert.

4. Saugrohr nach einem der Ansprüche 2 oder 3, **dadurch gekennzeichnet, dass**
- die Steuerung des Drehschiebers (5) mittels Unterdruck geschieht.

5. Saugrohr nach einem der Ansprüche 2 oder 3, **dadurch gekennzeichnet, dass**
- die Steuerung des Drehschiebers (5) elektromagnetisch und/oder hydraulisch ge schieht.

6. Saugrohr nach einem der Ansprüche 2 bis 5, **dadurch gekennzeichnet, dass**
- die Steuerung des Drehschiebers (5) mittels gekoppelter Schub- und Zugstange erfolgt.

7. Saugrohr nach einem der Ansprüche 2 bis 6, **dadurch gekennzeichnet, dass**
- die Steuerung des Drehschiebers (5) mittels gekoppeltem Schrittmotor erfolgt.

8. Saugrohr nach einem der Ansprüche 2 bis 7, **dadurch gekennzeichnet, dass**
- der Drehschieberkunststoff mit Gleitmitteln dotiert ist.

## Revendications

1. Tubulure d'aspiration pour la régulation de la consommation d'air dans le système d'aspiration d'un moteur à combustion interne ; l'aspiration de l'air dans le système d'aspiration étant divisée par au moins deux tubes oscillants (3,4) et lesdites oscillants présentant des longueurs différentes ; une valve rotative étant prévue dans au moins un tube oscillant (4) au moyen de laquelle valve ledit tube oscillant (4) peut être commandé de façon continue entre une ouverture et une fermeture complète et à laquelle raccordée à chaque fois, un autre tube oscillant ; ladite valve rotative (5) se trouvant directement à une extrémité dans le petit tube oscillant (4) qui est tourné vers l'embouchure (6) et où l'alésage coupe le petit tube oscillant (4) pour recevoir la valve rotative .

2. Tubulure d'admission selon la revendication 1, **caractérisée en ce que**
- la valve rotative (5) et/ou la tubulure d'aspiration (1) sont en matière plastique.

3. Tubulure d'admission selon une des revendications 1 ou 2, **caractérisée en ce que**
- le système d'aspiration (2) communique au moyen des tubes oscillants (3,4) avec un distributeur d'aspiration (7).

4. Tubulure d'admission selon la revendication 2 ou 3, **caractérisée en ce que**
- la commande de la valve rotative (5) a lieu au moyen d'une dépression.

5. Tubulure d'admission selon une des revendications 2 ou 3, **caractérisée en ce que**
- La commande de la valve rotative (5) se déroule de manière électromagnétique et/ou hydraulique.

6. Tubulure d'admission selon une des revendications 2 à 5, **caractérisée en ce que**
- la commande de la valve rotative (5) se déroule au moyen d'une tige de poussée et de traction.

7. Tubulure d'admission selon une des revendications 2 à 6, **caractérisée en ce que**
- la commande de la valve rotative (5) se déroule au moyen d'un moteur à pas couplé.

8. Tubulure d'admission selon une des revendications 2 à 7, **caractérisée en ce que**
- la matière plastique de la valve rotative est dotée de lubrifiants.

## Claims

1. Intake pipe for regulating air consumption in the intake tract of an internal combustion engine whereby the air intake in the intake tract can be separated by at least two oscillating tubes (3,4) and the said oscillating tubes present different lengths, whereby a rotary valve is provided at least in one oscillating tube (4) with which the oscillating tube (4) can be controlled continuously between a complete opening and closing and to which rotary valve another oscillating tube is respectively connected and whereby the rotary valve (5) is located directly at one end in the short oscillating tube (4) which is turned toward the inlet area (6), and whereby the bore intersects the short oscillating tube (4) for the reception of the rotary valve.

2. Intake pipe according to claim 1, **characterised in that**
- the rotary valve (5) and/or the intake pipe are made of plastic.

3. Intake pipe according to one of the claims 1 or 2, **characterised in that**
- the intake tract (2) communicates with an intake distributor (7) by means of the oscillating tube (3,4).

4. Intake pipe according to one of the claims 2 or 3, **characterised in that**
- the regulation of the rotary valve (5) occurs by means of depression.

5. Intake pipe according to one of the claims 2 or 3, **characterised in that**
- the regulation of the rotary valve (5) occurs electromagnetically and/or hydraulically .

6. Intake pipe according to one of the claims 2 -5, **characterised in that**
- the regulation of the rotary valve (5) occurs by means of a push rod and a pull rod .

7. Intake pipe according to one of the claims 2-6, **characterised in that** the
- the regulation of the rotary valve (5) occurs by means of a coupled step motor .

8. Intake pipe according to one of the claims 2-7, **characterised in that**
- the plastic of the rotary valve is provided with lubricants .
